(19) Europäisches Patentamt
European Patent Office
Office européen des brevets

(11) **EP 3 012 027 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(51) Int Cl.:
***B04B 9/08*** *(2006.01)*

(21) Anmeldenummer: **14189739.7**

(22) Anmeldetag: **21.10.2014**

(54) **ZENTRIFUGALKRAFTBETÄTIGTE KUPPLUNGSEINRICHTUNG FÜR EINE LABORZENTRIFUGE**

CENTRIFUGAL FORCE ACTUATED COUPLING DEVICE FOR A LABORATORY CENTRIFUGE

ENSEMBLE D'EMBRAYAGE ACTIONNÉ PAR LA FORCE CENTRIFUGE POUR UNE CENTRIFUGEUSE DE LABORATOIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.04.2016 Patentblatt 2016/17**

(73) Patentinhaber: **Sigma Laborzentrifugen GmbH 37520 Osterode/Harz (DE)**

(72) Erfinder: **Bittner, Matthias 37075 Göttingen (DE)**

(74) Vertreter: **REHBERG HÜPPE + PARTNER Patentanwälte PartG mbB Robert-Gernhardt-Platz 1 37073 Göttingen (DE)**

(56) Entgegenhaltungen:
**DE-A1-102012 011 531      JP-A- 2008 126 130
JP-A- 2010 142 696      JP-U- S56 164 040**

**Beschreibung**

**TECHNISCHES GEBIET DER ERFINDUNG**

Die Erfindung betrifft eine zentrifugalkraftbetätigte Kupplungseinrichtung für eine Laborzentrifuge. Des Weiteren betrifft die Erfindung eine Laborzentrifuge mit einer derartigen zentrifugalkraftbetätigten Kupplungseinrichtung.

**STAND DER TECHNIK**

Laborzentrifugen besitzen einen Rotor, welcher über über den Umfang verteilte Aufnahmen verfügt. In diese Aufnahmen sind Gefäße einsetzbar, in denen durch Zentrifugieren zu behandelnde Substanzen bevorratet sind. Um den Rotor mit den in den Aufnahmen aufgenommenen Gefäßen mit den Substanzen in die für das Zentrifugieren erforderliche Rotation zu versetzen, wird ein Abtriebselement des Rotors über eine Kupplungseinrichtung mit einem üblicherweise von einer Antriebswelle ausgebildeten Antriebselement der Laborzentrifuge, welches von einem Motor angetrieben ist, gekuppelt. Hierbei dient die Kupplungseinrichtung einer axialen Sicherung des Abtriebselements auf dem Antriebselement und damit des Rotors auf der angetriebenen Antriebswelle. Möglich ist, dass die Kupplungseinrichtung auch der formschlüssigen Übertragung des Antriebsmoments von der Antriebswelle auf den Rotor dient. Vorzugsweise erfolgt aber die Übertragung des Antriebsmoments über einen Reibschluss von Kupplungsflächen, wobei die Anpresskraft der Kupplungsflächen abhängig sein kann von einem Eigengewicht des Rotors und einer Kraftkomponente einer Kupplungskraft. An die Betriebssicherheit der Kupplungseinrichtung sind hohe Anforderungen zu stellen insbesondere infolge sich bei den hohen Drehzahlen ergebenden aerodynamischen Effekten, den großen Zentrifugalkräften, Kreiseleffekten bei einem sichtlichen Stoß auf die Laborzentrifuge und ähnlichem.

Im bestimmungsgemäßen Laborbetrieb der Laborzentrifuge ist eine wiederholte Montage und Demontage des Rotors erforderlich, um mit demselben Rotor oder unterschiedlichen Rotoren sukzessive eine Vielzahl von Gefäßen mit zu zentrifugierenden Substanzen untersuchen zu können. Hierbei hat sich herausgestellt, dass angesichts des manuellen Betätigungsaufwands und des hiermit verbundenen Zeitbedarfs, aber auch hinsichtlich der Betriebssicherheit der Einsatz von manuell betätigten Kupplungseinrichtungen nachteilig sein kann. Aus diesem Grund finden zentrifugalkraftbetätigte Kupplungseinrichtungen Einsatz, bei welchen das Abtriebselement des Rotors lediglich auf das von dem Motor angetriebene Antriebselement der Laborzentrifuge aufgesetzt wird. Während anfänglich lediglich ein Reibschluss zwischen Antriebselement und Abtriebselement infolge des Eigengewichts des Rotors für die Kupplung zwischen Antriebselement und Abtriebselement sorgt, steigt mit zunehmender Drehzahl des Rotors zentrifugalkraftbedingt die Kupplungskraft der zentrifugalkraftbetätigten Kupplungseinrichtung. Je größer hierbei die Drehzahl ist umso größer ist automatisch die durch die Zentrifugalkraft erzeugte Kupplungskraft. Mit Beendigung des Zentrifugierens kann die Antriebswelle abgebremst werden, womit automatisch die zentrifugalkraftbetätigte Kupplungseinrichtung gelöst wird. (Eine manuell betätigte Kupplungseinrichtung kann durchaus auch zusätzlich zu einer derartigen zentrifugalkraftbetätigten Kupplungseinrichtung eingesetzt sein.)

Aus US 6,063,018 ist eine Laborzentrifuge bekannt, bei welcher ein Antriebselement mit einer kegelstumpfförmigen Antriebsfläche von einem Motor angetrieben wird. Der Rotor verfügt über eine entsprechende kegelstumpfförmige innenliegende Reibfläche, mit welcher der Rotor infolge des Eigengewichts auf die kegelstumpfförmige Reibfläche des Antriebselements gepresst wird. Mit einsetzender Antriebsbewegung des Antriebselements führt die Reibkraft zwischen den Reibflächen zur Übertragung der Drehbewegung auf den Rotor. In einer Querebene des Antriebselements sind auf dem Umfang verteilt und einander gegenüberliegend zwei Kupplungshebel infolge der Zentrifugalkraft nach außen verschwenkbar gelagert. Gegenüber der Querrichtung des Antriebselements geneigte Kupplungsflächen der Kupplungshebel werden infolge der Zentrifugalkraft an entsprechende Gegen-Kupplungsflächen des Rotors gepresst. Auf diese Weise wird einerseits eine formschlüssige axiale Sicherung des Rotors auf dem Antriebselement herbeigeführt. Infolge der Neigung der Kupplungsflächen und Gegen-Kupplungsflächen führt die Zentrifugalkraft zu einer drehzahlabhängigen Axialkraftkomponente, welche mit zunehmender Drehzahl zunehmend die Anpresskraft der kegelstumpfförmigen Reibflächen aneinander erhöht. Nach dem Aufsetzen des Rotors auf das Antriebselement drücken Federn die Kupplungshebel bereits radial nach außen, womit auch ohne Rotation bereits eine Verriegelung des Rotors erfolgt. Für eine Entriegelung des Rotors ist eine manuelle Betätigung eines Knopfs erforderlich, welche zu einer Bewegung der Kupplungshebel radial nach innen führt mit damit einhergehender Entriegelung der Kupplungseinrichtung.

Eine entsprechende Lösung ist aus WO 2010/025922 A1 bekannt.

DE 10 2012 011 531 A1 offenbart einen Antriebskopf für eine Laborzentrifuge, bei dem eine Kupplungseinrichtung zum Einsatz kommt, deren Wirkung durch die Zentrifugalkraft zumindest verstärkt wird. Der Antriebskopf weist dabei einen von einem Motor angetriebenen Grundkörper auf, mit dem beim Betrieb der Laborzentrifuge eine mit einem Rotor der Laborzentrifuge verbundene Nabe lösbar verbunden wird. An der Nabe befinden sich dabei mindestens zwei voneinander verschiedene Kupplungshebel, die jeweils um eine Achse verschwenkbar sind, die parallel zu der Rotationsachse der Laborzentrifuge steht. Im Stillstand der Zentrifuge sind die Kupplungshebel in den Grundkörper eingeschwenkt oder stehen unter einer Vorspannung nach außen, die durch eine Feder bewirkt wird. Auf den Grundkörper wird die Nabe aufgeschoben, bis den Kupplungshebeln jeweils eine geeignet geformte Hinterschneidung in der Nabe gegenüberliegt. Bei Rotation der Zentrifuge schwenken die exzentrisch angeordneten Kupplungshebel infolge der Fliehkraft um ihre Drehachse nach außen aus und dadurch in die jeweilige Hinterschneidung der Nabe ein. Die Hinterschneidungen sind an ihrer unteren Kante, die mit dem Kupplungshebel in Kontakt steht, so geformt, dass die Nabe bei Ausschwenken der Kupplungshebel in Axialrichtung auf den Grundkörper gepresst und reibschlüssig mit diesem verbunden wird.

Während für die vorgenannten Ausführungsformen der Kupplungshebel an dem Antriebselement gelagert ist und in einer Querebene des Antriebselements verschwenkt wird, offenbart WO 2011/001729 A1 eine Ausführungsform, bei welcher der Kupplungshebel am Abtriebselement des Rotors in einer die Rotationsachse beinhaltenden Ebene verschwenkbar gelagert ist. Infolge der Zentrifugalkraft wird der Kupplungshebel radial nach außen verschwenkt, wo dieser in eine Hinterschneidung einer stirnseitigen Ausnehmung einer Antriebswelle eingreift.

Die aus US 6,063,018, WO 2010/025922 A1 und WO 2011/001729 A1 bekannten Ausführungsformen beruhen auf einer Verschwenkung einer Verriegelungsnase eines Kupplungshebels infolge der Zentrifugalkraft nach außen. Von Interesse kann aber auch eine Verriegelungsbewegung einer Verriegelungsnase eines Kupplungshebels nach innen sein, beispielsweise um einen am Rotor gelagerten Kupplungshebel mit einer Nut einer Antriebswelle zu verriegeln. Für die erforderliche "Umlenkung" der Zentrifugalkraft zur Beaufschlagung der Verriegelungsnase radial nach innen finden Verriegelungshebel Einsatz, bei welchen der Schwerpunkt des Verriegelungshebels radial außenliegend von einer Schwenkachse des Verriegelungshebels angeordnet ist, während die Verriegelungsnase des Verriegelungshebels radial innenliegend von der Schwenkachse angeordnet ist. Beispiele derartiger Ausführungsformen sind den Druckschriften WO 2011/054901 A1, WO 2011/054906 A1 und WO 2012/059151 A1 zu entnehmen.

## AUFGABE DER ERFINDUNG

Der Erfindung liegt die Aufgabe zugrunde, eine alternative Ausgestaltung einer zentrifugalkraftbetätigten Kupplungseinrichtung und einer Laborzentrifuge mit einer derartigen zentrifugalkraftbetätigten Kupplungseinrichtung vorzuschlagen, welche insbesondere hinsichtlich

- des Bauaufwands,
- der Betriebsfestigkeit und/oder
- der Kupplungscharakteristik

verbessert ist.

## LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

## BESCHREIBUNG DER ERFINDUNG

Der Erfindung liegt die Erkenntnis zugrunde, dass der Einsatz einer zentrifugalkraftbetätigten Kupplungseinrichtung mit einem Kupplungshebel gemäß dem Stand der Technik nachteilig ist, da die schwenkbare Lagerung des Kupplungshebels zusätzlichen Lageraufwand bis hin zum Einsatz eines Wälzlagers erfordert, was mit einer Erhöhung des erforderlichen Einbauraums, infolge der hohen im Betrieb wirkenden Kräfte zu einer verringerten Betriebsfestigkeit und/oder erhöhten Kosten führen kann. Andererseits ist bei einem Einsatz eines derartigen verschwenkbaren Kupplungshebels die Bewegungsbahn einer Rastnase des Kupplungshebels entlang eines Kreisbogens um die Schwenkachse vorgegeben.

Die erfindungsgemäße zentrifugalkraftbetätigte Kupplungseinrichtung für eine Laborzentrifuge verfügt über ein Antriebselement, welches von einem Motor angetrieben ist, und ein Abtriebselement, welches einem Rotor der Laborzentrifuge zugeordnet ist. Des Weiteren verfügt die Kupplungseinrichtung über ein Kupplungselement, welches durch eine Kupplungskraft betätigt wird, indem dieses von einer nicht gekuppelten Stellung in eine gekuppelte Stellung bewegt wird. Hierbei kann in der gekuppelten Stellung lediglich ein Reibschluss oder ein Klemmen erfolgen. Ebenfalls möglich ist, dass in der gekuppelten Stellung ein Formschluss herbeigeführt wird, welcher ausschließlich axial wirken kann, ausschließlich in Umfangsrichtung zur Übertragung des Antriebsmoments wirken kann oder sowohl axial als auch in Umfangsrichtung wirken kann. Erfindungsgemäß erfolgt die Betätigung des Kupplungselements durch eine Kupplungskraft, die von einer Zentrifugalkraft infolge des rotierenden Antriebselements abhängig ist. Vorzugsweise wird das Kupplungselement gegen die Mantelfläche des Antriebselements gepresst und/oder in eine Ausnehmung oder Nut des als Antriebswelle ausgebildeten Antriebselements hineingedrückt.

Erfindungsgemäß wird vorgeschlagen, dass eine Führungsbahn vorgesehen ist, welche eine Zentrifugalkraft einer Exzentermasse, die die (oder zumindest einen Teil der) Kupplungskraft erzeugt, umlenkt. Hierbei kann die Führungsbahn geradlinig, mit Teilgeradenstücken oder beliebig kurvenförmig ausgebildet sein, wobei die Führung quer zu einer Führungsrichtung durch die Führungsbahn einseitig oder beidseitig erfolgen kann. Hierbei kann die Führungsbahn beispielsweise als Führungsschiene oder beliebige Führungsfläche ausgebildet sein. Während gemäß dem Stand der Technik eine "Umlenkung" der Zentrifugalkraft durch den Einsatz eines Schwenkhebels erfolgt, wird erfindungsgemäß eine Umlenkung durch die Führungsbahn herbeigeführt, womit eine abweichende Führungsmaßnahme eingesetzt ist, der Einsatz einer Schwenklagerung entbehrlich sein kann und auch hinsichtlich der Charakteristik der Umlenkung der Gestaltungsspielraum vergrößert werden kann. Je nach Neigung der Führungsbahn kann einerseits eine Wirkrichtung der Zentrifugalkraft verändert werden. Andererseits kann je nach Gestaltung der Kontaktbedingungen mit der Führungsbahn und/oder Neigung der Führungsbahn auch lediglich eine Komponente der Zentrifugalkraft der Exzentermasse übertragen oder unter Umlenkung "weitergegeben" werden, womit letztendlich durch die Gestaltung der Kontaktbedingungen mit der Führungsbahn und die Neigung derselben die Abhängigkeit der Kupplungskraft von der Drehzahl des rotierenden Antriebselements beeinflusst werden kann.

Im Rahmen der Erfindung kann durchaus lediglich eine einmalige Umlenkung durch eine Führungsbahn erfolgen. Möglich ist aber auch, dass eine zweifache oder mehrfache Umlenkung erfolgt, indem mindestens eine weitere Führungsbahn vorgesehen ist, im Bereich welcher die Zentrifugalkraft der Exzentermasse, die die Kupplungskraft erzeugt, nochmals umgelenkt wird. Um lediglich ein Beispiel zu nennen, kann mittels einer ersten Führungsbahn eine Umlenkung der Zentrifugalkraft der Exzentermasse von einer Richtung, welche radial nach außen orientiert ist, in eine Richtung, welche koaxial zur Rotationsachse des Rotors orientiert ist, erfolgen, wobei auch möglich ist, dass mit der Umlenkung durch diese Führungsbahn lediglich eine Komponente der Zentrifugalkraft übertragen wird. Die dann verbleibende Zentrifugalkraft wird dann mittels der weiteren Führungsbahn nochmals umgelenkt in eine Wirkrichtung, welche radial nach innen orientiert ist und das Kupplungselement radial nach innen betätigt. Auch hier kann lediglich eine Komponente der Zentrifugalkraft durch die weitere Führungsbahn übertragen werden. Es versteht sich, dass durch die Umlenkung mit der Führungsbahn und/oder weiteren Führungsbahn auch eine Erhöhung der übertragenen Zentrifugalkraft erfolgen kann, indem eine Art "Keileffekt" für die Übertragung im Bereich der Führungsbahn genutzt wird.

Im Rahmen der Erfindung kann unmittelbar die Exzentermasse oder das Kupplungselement oder aber ein im Kraftfluss zwischen Exzentermasse und Kupplungselement wirkender Aufnahme- oder Übertragungskörper mit der Führungsbahn und/oder der weiteren Führungsbahn in Wechselwirkung treten, wobei dies mit einem wälzenden oder gleitenden Kontakt erfolgen kann. Für einen besonderen Vorschlag der Erfindung ist die Exzentermasse als Kugel oder Rolle ausgebildet, welche einen wälzenden Kontakt mit der Führungsbahn und/oder der weiteren Führungsbahn ausbildet. Durch Einsatz eines wälzenden Kontakts kann die Reibung reduziert werden. Durch Ausbildung der Exzentermasse als Kugel oder Rolle kann des Weiteren die Nutzung einer Exzentermasse in einer Ausgestaltung erfolgen, die in hoher Stückzahl, mit hoher Präzision und unter Umständen auch mit gehärteter Oberfläche hergestellt wird.

In weiterer Ausgestaltung ist (zusätzlich zu der Exzentermasse und etwaigen weiteren Übertragungskörpern) ein Aufnahmekörper vorhanden. Dieser Aufnahmekörper nimmt eine durch die geneigte Führungsbahn umgelenkte Zentrifugalkraft, die parallel zu der Rotationsachse orientiert ist, auf. In diesem Fall ist der Aufnahmekörper dann über die weitere Führungsbahn geführt. Die weitere Führungsbahn ist hierbei gegenüber der Rotationsachse des Rotors und gegenüber der Richtung quer zur Rotationsachse derart geneigt, dass die von dem Aufnahmekörper aufgenommene Zentrifugalkraft, die parallel zu der Rotationsachse orientiert ist, umgewandelt wird in die Kupplungskraft, welche das Kupplungselement radial nach innen beaufschlagt.

Möglich ist hierbei, dass der Aufnahmekörper separat von dem Kupplungselement ausgebildet ist, solange die durch die Wechselwirkung des Aufnahmekörpers mit der weiteren Führungsbahn erzeugte Kupplungskraft von dem Aufnahmekörper an das Kupplungselement (unter Zwischenschaltung einer Kontaktfläche oder weiterer Übertragungskörper) übertragen wird. Eine besonders kompakte Ausgestaltung der Erfindung ergibt sich, wenn der Aufnahmekörper von dem Kupplungselement selber ausgebildet ist.

Wie eingangs erwähnt, kann das Kupplungselement lediglich reibschlüssig mit der Mantelfläche des Antriebselements zusammenwirken. In bevorzugter Ausgestaltung greift das Kupplungselement aber formschlüssig in eine Ausnehmung des Antriebselements, insbesondere eine umlaufende Nut einer Antriebswelle, ein.

Mit Einpressen des Kupplungselements in die vorgenannte Ausnehmung mit der Kupplungskraft kann ausschließlich die axiale Sicherung des Abtriebselements und damit des Rotors gegenüber dem Antriebselement, insbesondere der Antriebswelle, erfolgen. Ebenfalls möglich ist, dass hierdurch ein Formschluss in Umfangsrichtung herbeigeführt wird. In bevorzugter Ausgestaltung der Erfindung treten das Kupplungselement und die Ausnehmung des Antriebselements über Kontaktflächen miteinander in Wirkverbindung. Hierbei sind die Kontaktflächen derart geneigt, dass die Kupplungskraft in eine Axialkraftkomponente umgewandelt wird. Das Abtriebselement besitzt dabei eine gegenüber der Rotationsachse geneigte Reibfläche, während das Antriebselement eine entsprechend gegenüber der Rotationsachse geneigte Gegen-Reibfläche besitzt. Die Axialkraftkomponente presst die Reibfläche des Abtriebselements axial in eine Montagerichtung gegen die Gegen-Reibfläche des Antriebselements, womit einerseits die axiale Sicherung in Montagerichtung gestärkt werden kann und unter Umständen auch eine Übertragung des Antriebsmoments zwischen der Reibfläche und der Gegen-Reibfläche durch Erhöhung der wirkenden Reibkräfte unterstützt wird.

Für die Anordnung der im Kraftfluss zwischen der Exzentermasse und dem Kupplungselement beteiligten Komponente gibt es vielfältige Möglichkeiten. So können diese beispielsweise lose in geeignete Aufnahmeräume der Kupplungseinrichtung und der Laborzentrifuge eingelegt sein oder in entsprechenden Ausnehmungen geführt sein. In bevorzugter Ausgestaltung der Erfindung verfügt die Kupplungseinrichtung über einen Einsatzkäfig, der bspw. einstückig oder mit einem Grundkörper und einem Deckel gebildet sein kann. In dem Einsatzkäfig ist/sind die Exzentermasse, der Aufnahmekörper, das Kupplungselement und/oder ein eine Führungsfläche ausbildender Führungskörper aufgenommen. Des Weiteren möglich ist, dass der Einsatzkäfig die Führungsfläche und/oder die weitere Führungsfläche ausbildet. Ein derartiger Einsatzkäfig kann somit gezielt für die Aufnahme der vorgenannten Komponenten und/oder für die Ausbildung der Führungsflächen ausgelegt und gefertigt werden. Unter Umständen bildet der Einsatzkäfig mit den darin aufgenommenen Komponenten auch ein montagefähiges Baumodul.

Eine weitere Lösung der der Erfindung zugrunde liegenden Aufgabe ist gegeben durch eine Laborzentrifuge, bei welcher eine Kupplungseinrichtung, wie diese zuvor erläutert worden ist, Einsatz findet.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1     zeigt in einer räumlichen Darstellung einen Teilschnitt eines Teils einer Laborzentrifuge in entriegeltem Zustand des Rotors.

Fig. 2     zeigt in einem Längsschnitt den Teil der Laborzentrifuge gemäß Fig. 1 in entriegeltem Zustand des Rotors.

Fig. 3     zeigt in einem Längsschnitt den Teil der Laborzentrifuge gemäß Fig. 1 in verriegeltem Zustand des Rotors.

Fig. 4     zeigt in einem anderen Längsschnitt den Teil der Laborzentrifuge gemäß Fig. 1 in entriegeltem Zustand des Rotors.

Fig. 5     zeigt in einer Explosionsdarstellung den Teil der Laborzentrifuge gemäß Fig. 1 bis 4.

Fig. 6     zeigt in räumlicher Darstellung schräg von oben einen Grundkörper eines Einsatzkäfigs.

Fig. 7     zeigt in räumlicher Darstellung schräg von unten einen Abschlussdeckel.

Fig. 8     zeigt ein Freikörperbild einer als Rolle ausgebildeten Exzentermasse und eines Kupplungselements einer Kupplungseinrichtung.

Fig. 9 bis 13     zeigen stark schematisiert weitere Kupplungseinrichtungen.

**FIGURENBESCHREIBUNG**

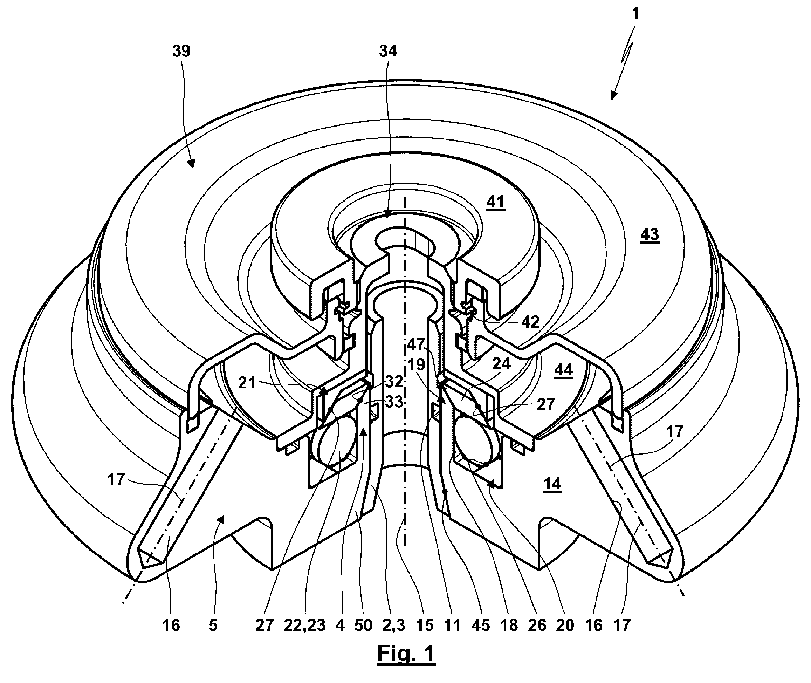

In den **Fig. 1 bis 5** ist ein Teil einer Laborzentrifuge 1 dargestellt. Die Laborzentrifuge 1 weist ein Antriebselement 2, welches als Antriebswelle 3 ausgebildet ist, und ein mit dem Antriebselement 2 über eine Kupplungseinrichtung 4 gekoppeltes Abtriebselement 50, welches von einem Rotor 5 ausgebildet ist, auf. Zur Vereinfachung sind weitere Teile der Laborzentrifuge 1, insbesondere ein Motor, eine Steuerelektronik und ein Interface mit Anzeige und Eingabeelementen sowie ein mit einem Deckel verschließbares Gehäuse nicht dargestellt.

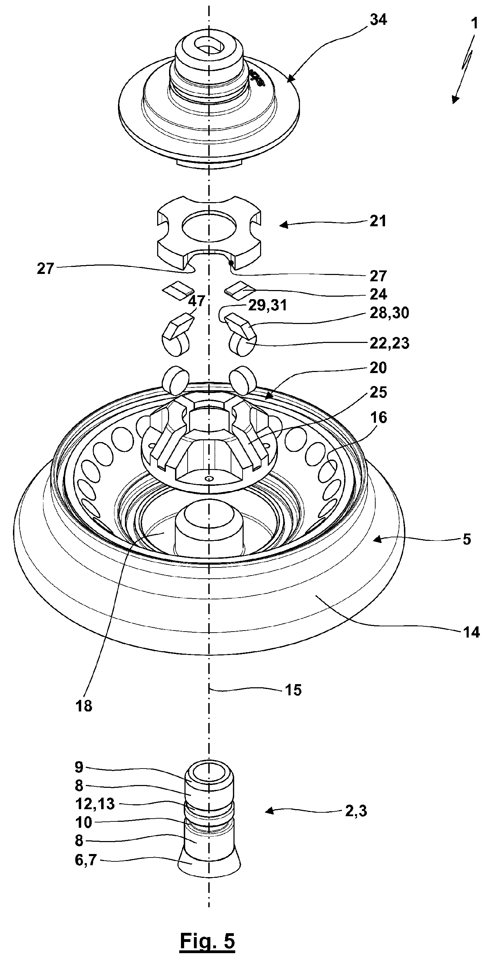

Für das dargestellte Ausführungsbeispiel ist die Antriebswelle 3 als Hohlwelle ausgebildet (vgl. Fig. 5). Die Antriebswelle 3 verfügt über eine kegelstumpfförmige Teilmantelfläche 6, mit welcher eine Gegen-Reibfläche 7 gebildet ist. Hieran schließt nach oben, also in Richtung des Inneren des Rotors 5, eine zylindrische Teilmantelfläche 8 der Antriebswelle 3 an, welche stirnseitig übergeht in eine Einführschräge 9. In der Teilmantelfläche 8 befindet sich eine umlaufene Nut 10, in welcher ein elastisches Dichtelement 11 angeordnet ist. Die Teilmantelfläche 8 weist darüber hinaus eine Ausnehmung 12, hier eine umlaufende Nut 13 auf, über welche in im Folgenden näher spezifizierter Weise die Kupplung der Antriebswelle 3 mit dem Rotor 5 erfolgt.

Der Rotor 5 weist einen in grober Näherung als tellerförmig zu bezeichnenden Grundkörper 14 auf. Über den Umfang gleichmäßig verteilt sind in dem Grundkörper 14 bei gleichem Abstand von einer Längs- und Rotationsachse 15 mehrere Aufnahmen 16 für hier nicht dargestellte Behälter, welche die zu zentrifugierende Substanz beinhalten, verteilt. Hierbei sind die Längsachsen 17 der Aufnahmen 16 in die Längs- und Rotationsachse 15 und die radiale Richtung hierzu beinhaltenden Ebenen angeordnet und unter einem spitzen Winkel gegenüber der Längs- und Rotationsachse 15 geneigt.

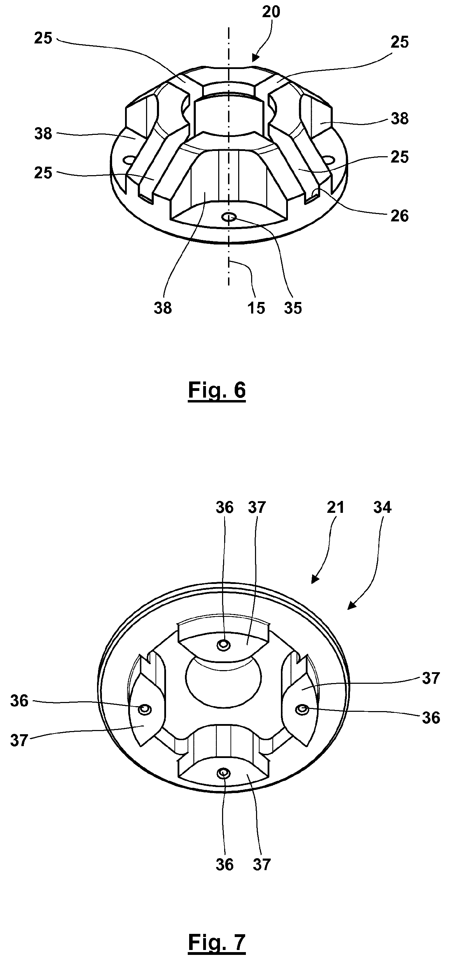

Der Grundkörper 14 bildet eine sich koaxial zur Längs- und Rotationsachse 15 erstreckende, nach oben offene Ringkammer 18 aus. Wie insbesondere in **Fig. 5** zu erkennen ist, ist in diese Ringkammer 18 von oben ein Einsatzkäfig 19 eingesetzt, welcher mit einem Grundkörper 20 und einem Abdeckkörper 21 gebildet ist. Zwischen dem Grundkörper 20 und dem Abdeckkörper 21 sind in dem Einsatzkäfig 19 gleichmäßig in Umfangsrichtung verteilt vier Exzentermassen 22, die hier als Rollen 23 ausgebildet sind, und vier Kupplungselemente 24 aufgenommen. Der Grundkörper 20 des Einsatzkäfigs 19 besitzt vier gleichförmig über den Umfang verteilte Schlitze 25, welche sich in radial orientierten Ebenen erstrecken (**Fig. 6**). In diesen Schlitzen 25 ist jeweils eine Rolle 23 und ein Kupplungselement 24 so geführt, dass die Rolle 23 unter geringem Spiel in Umfangsrichtung eine im Folgenden noch näher beschriebene rollende Bewegung in dem Schlitz 25 ausführen kann und das Kupplungselement 24, ebenfalls mit geringem Spiel in Umfangsrichtung in dem Schlitz 25 verschoben werden kann. Im Bodenbereich bildet der Grundkörper 20 eine Führungsbahn 26 aus, welche für das dargestellte Ausführungsbeispiel von einer ebenen Führungsfläche gebildet ist und gegenüber einer Querebene zur Längsachse 15 um einen Winkel von ca. 25 bis 60°, vorzugsweise 30 bis 50° oder 45°, bei Blickrichtung radial nach außen nach oben ansteigend geneigt ist. An den Führungsbahnen 26 der Schlitze 25 liegt jeweils eine Rolle 23 an (Fig. 1). Von oben ist auf den Grundkörper 20 der Abdeckkörper 21 derart aufgesetzt, dass die Schlitze 25 durch den Abdeckkörper 21 nach oben geschlossen sind. Der Abdeckkörper 21 bildet hierbei im Bereich der Begrenzung der Schlitze 25 jeweils weitere Führungsbahnen 27 aus. Die Kupplungselemente 24 besitzen in der Querebene zur Längsachse 15 einen rechteckigen Querschnitt, während diese in einer die Längsachse 15 beinhaltenden Radialebene in grober Näherung trapezförmig ausgebildet sind mit Anordnung von zwei Seiten des Trapezes jeweils in einer Querebene zur Längsachse 15. Die anderen Seitenflächen 28, 29 bilden Führungsflächen 30, 31 aus, welche entsprechend der Neigung der weiteren Führungsbahnen 27 geneigt sind. Die Kupplungselemente 24 sind in den Schlitzen 25 mit der radial außenliegend angeordneten Führungsfläche 31 an der weiteren Führungsbahn 27 geführt und mit der radial innenliegenden Führungsfläche 30 an einer geneigten weiteren Führungsbahn 32 derart gleitend geführt, dass sich das Kupplungselement 24 nur parallel zu den weiteren Führungsbahnen 27, 32 bewegen kann (also nur in Richtung der Längs-und Rotationsachse 15 bewegen kann, wenn gleichzeitig eine Bewegung parallel zur Längs- und Rotationsachse erfolgt). Für das dargestellte Ausführungsbeispiel ist die weitere Führungsbahn 32 ausgebildet von einer geneigten Stirnseite einer hülsenartig umlaufenden Wandung 33 des Grundkörpers 14.

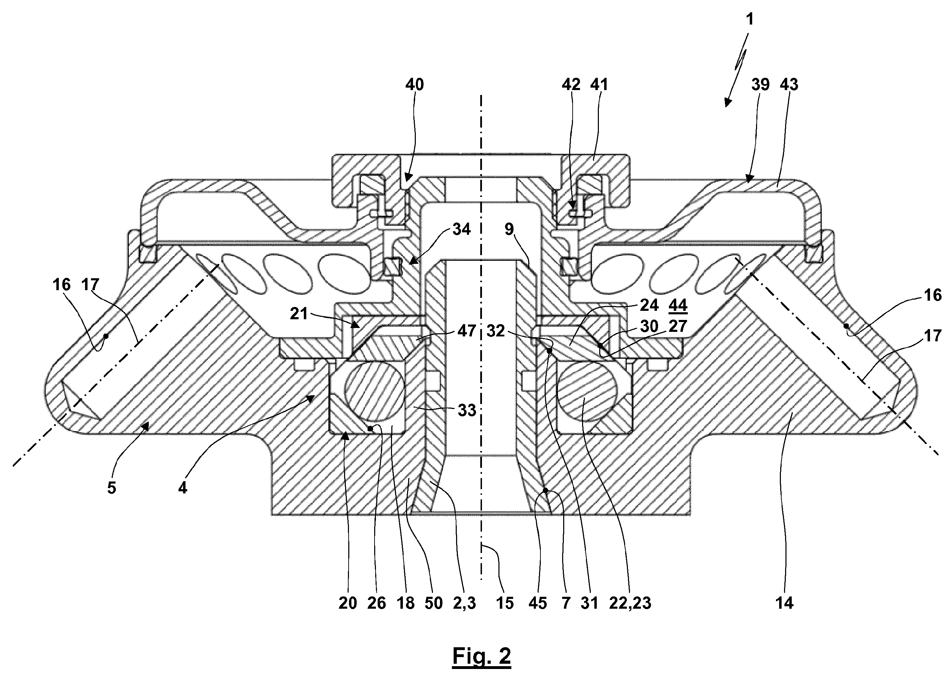

Für ruhenden Rotor 5 liegen die Kupplungselemente 24 infolge ihres Eigengewichts von oben auf den zugeordneten Rollen 23 auf. In dieser in Fig. 2 dargestellten nicht gekuppelten Stellung liegen die Rollen 23 an der äußeren Mantelfläche der Wandung 33, den Führungsbahnen 26 des Grundkörpers 20 und der Unterseite der Kupplungselemente 24 an.

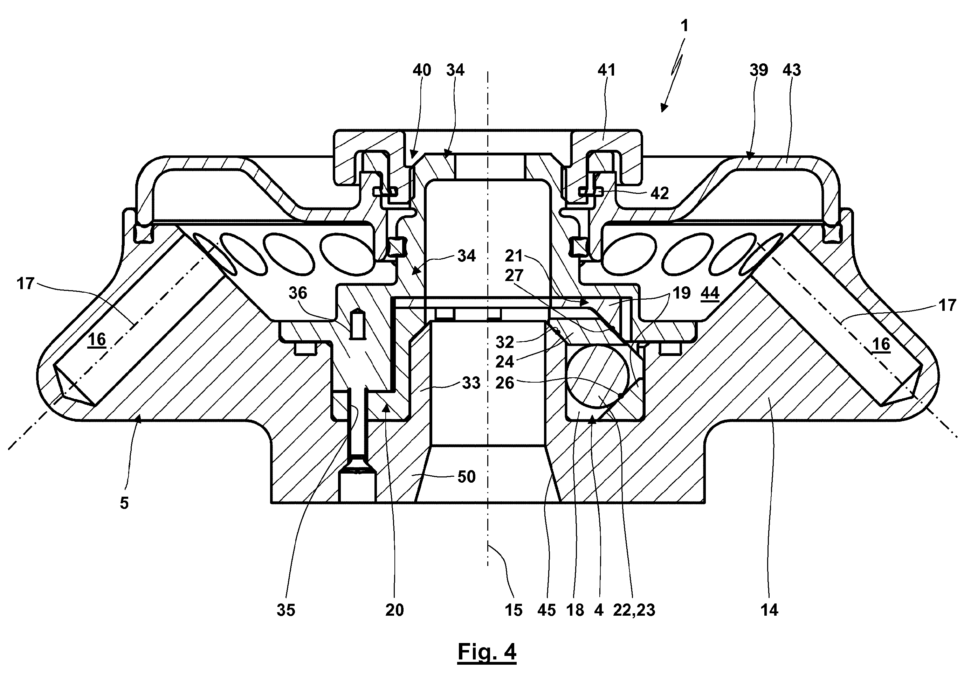

Der mit dem Grundkörper 20 und dem Abdeckkörper 21 gebildete Einsatzkäfig 19 mit darin angeordneten Rollen 23 und Kupplungselementen 24 wird axial gesichert und verspannt durch einen Verschlussdeckel 34, der in **Fig. 7** dargestellt ist. Wie insbesondere in Fig. 4 zu erkennen ist, ist der Verschlussdeckel hierzu über eine Schraubverbindung, welche sich von der Unterseite durch den Grundkörper 14, durch eine Bohrung 35 des Grundkörpers 20 in eine Gewindebohrung 36 des Verschlussdeckels 34 erstreckt, an dem Grundkörper 14 des Rotors befestigt mit dazwischen gefangenem Einsatzkäfig 16. Der Abschlussdeckel 34 bildet über den Umfang verteilt vier Fortsätze 37 aus, welche spielfreie Aufnahme finden in entsprechenden Ausnehmungen 38 des Grundkörpers 20 des Einsatzkäfigs 19.

Auf den Grundkörper 14 ist unter fluiddichter Abdichtung ein Gehäusedeckel 39 mit einer Schraubverbindung 40 mit dem Verschlussdeckel 36 aufgeschraubt. Für das dargestellte Ausführungsbeispiel ist der Gehäusedeckel 39 mehrstückig gebildet mit einer Gehäusemutter 41 und einem mit der Gehäusemutter 41 über ein unlösbares Rastelement 42 verbundenes Deckelteil 43. Zwischen dem Grundkörper 14, dem Deckelteil 43 und dem Verschlussdeckel 34 ist ein um die Längs- und Rotationsachse 15 umlaufender, fluiddicht abgeschlossener Aufnahmeraum 14 begrenzt, in welchen die Aufnahmen 16 einmünden.

Die Funktionsweise der Laborzentrifuge ist wie folgt:

Für von der Antriebswelle 3 entfernten Rotor 5 wird zunächst der Gehäusedeckel 39 durch Lösen der Schraubverbindung 40 entfernt, so dass die Aufnahmen 16 frei zugänglich sind und in diesen Behälter mit der zu zentrifugierenden Substanz angeordnet werden können. Durch Verschrauben der Schraubverbindung 40 wird der Gehäusedeckel 39 daran anschließend an dem Grundkörper 14 des Rotors 5 fixiert. Damit ist der Aufnahmeraum 44 fluiddicht abgeschlossen.

Nun wird der Rotor 5 bei koaxialer Anordnung der Längsachsen von oben auf die Antriebswelle 3 aufgesetzt. Die Antriebswelle 3 tritt so weit in das Innere des Rotors 5 ein, dass eine kegelstumpfförmige Reibfläche 45 des Grundkörpers 14 des Rotors 5 möglichst vollflächig zur Anlage kommt an die Gegen-Reibfläche 7 der Antriebswelle 3. Infolge des Eigengewichts des Rotors 5 wird in dem Reibkontakt zwischen Reibfläche 45 und Gegen-Reibfläche 7 eine Reibkraft erzeugt.

Bei Antrieb der Antriebswelle 3 über den Motor der Laborzentrifuge 1 wird die Drehbewegung der Antriebswelle 3 über den Reibkontakt zwischen Reibfläche 45 und Gegen-Reibfläche 7 auf den Rotor 5 übertragen, wobei der Kontakt zwischen der Reibfläche 45 und der Gegen-Reibfläche 7 eine Art Rutschkupplung bildet. Mit zunehmender Drehzahl des Rotors 5 werden die Exzentermassen 22 in Form der Rollen 23 mit einer sich vergrößernden Zentrifugalkraft 46 beaufschlagt. Diese hat zur Folge, dass sich die Rollen 23 entlang der Führungsbahnen 26 wälzend bewegen, was zur Folge hat, dass einerseits die Rollen 23 weiter radial nach außen gelangen und andererseits mit dieser radialen Bewegung eine Hubbewegung der Rollen 23 parallel zur Längs- und Rotationsachse 15 erfolgt. Diese Hubbewegung der Rollen 23 hat zur Folge, dass die Kupplungselemente 24, welche auf der Oberseite der Rollen 23 aufliegen, infolge der Zentrifugalkraft mit einer Hubkraft $F_H$ nach oben beaufschlagt werden. Infolge der Führung der Kupplungselemente 24 durch die weiteren Führungsbahnen 27, 32 wird die Bewegung der Rollen 23 nach oben umgewandelt in eine Bewegung der Kupplungselemente 24 parallel zu den weiteren Führungsbahnen 27, 32. Somit verursacht die wälzende Bewegung der Rollen 23 entlang der Führungsbahnen 26 des Grundkörpers 20 des Einsatzkäfigs 19 eine Bewegung der Kupplungselemente 24 mit einer Bewegungskomponente, welche parallel zur Längsachse 15 nach oben orientiert ist sowie einer Bewegungskomponente, welche radial nach innen in Richtung der Längs- und Rotationsachse 15 orientiert ist. Die letztgenannte Bewegungskomponente hat zur Folge, dass das Kupplungselement 24 mit seiner radial innenliegend ausgebildeten Rastnase 47 in die Ausnehmung 12 oder Nut 13 der Antriebswelle 3 eintritt, womit ein axialer Formschluss herbeigeführt wird. Die Kupplungskraft $F_{KK}$, mit welcher die Rastnase 47 der Kupplungselemente 24 in die Nut 13 der Antriebswelle 3 eingepresst wird, hängt ab von der Zentrifugalkraft 46 (also der Drehzahl des Rotors 5) sowie der Umlenkung und der jeweils relevanten Komponente der Zentrifugalkraft 46 bei Erzeugung der Hubkraft $F_H$ an der Rolle 23 infolge der geneigten Führungsbahn 26 sowie der radial nach innen orientierten Kupplungskraft $F_{KK}$, welche aus der vorgenannten Hubkraft $F_H$ als Kraftkomponente an den weiteren Führungsbahnen 27, 32 erzeugt wird.

Möglich ist, dass die Rastnase 47 ausschließlich eine axiale Sicherung des Rotors 5 gegenüber der Antriebswelle 3 gewährleistet, womit eine Verriegelung gebildet ist, welche vermeidet, dass sich der Rotor 5 unbeabsichtigt von der Gegen-Reibfläche 7 der Antriebswelle 3 löst. Vorzugsweise verfügen aber die Nut 13 und die Rastnasen 47 der Kupplungselemente 24 in ihrem Kontaktbereich jeweils über gegenüber der Querebene zu der Längsachse 15 geneigte Kontaktflächen. Infolge der Neigung der Kontaktflächen führt die von dem Kupplungselement 24 applizierte Kupplungskraft $F_{KK}$ zu einer Axialkraftkomponente, welche die Anpresskraft der Reibfläche 45 an die Gegen-Reibfläche 7 drehzahlabhängig vergrößert.

Im Rahmen der Beschreibung und der Patentansprüche wird teilweise davon gesprochen, dass über die Führungsbahn 26 und die weiteren Führungsbahnen 27, 32 die "Zentrifugalkraft der Exzentermasse" umgelenkt wird oder die Zentrifugalkraft auf die Rolle 23, das Kupplungselement 24 oder die Rastnase 47 und die Nut 13 wirkt. Streng genommen handelt es sich hierbei nicht um die Zentrifugalkraft, sondern eine (entsprechend größere oder kleinere) Kraft (-Komponente) $F_H$, $F_{KK}$, die von der Zentrifugalkraft abhängig ist, durch Umlenkung durch eine Führungsbahn 26, 27 erzeugt ist und deren Betrag sich aus den jeweiligen geometrischen Verhältnissen ergibt. Im Bereich der Reibfläche 45 bildet der Grundkörper 14 des Rotors 5 das Abtriebselement 50 aus.

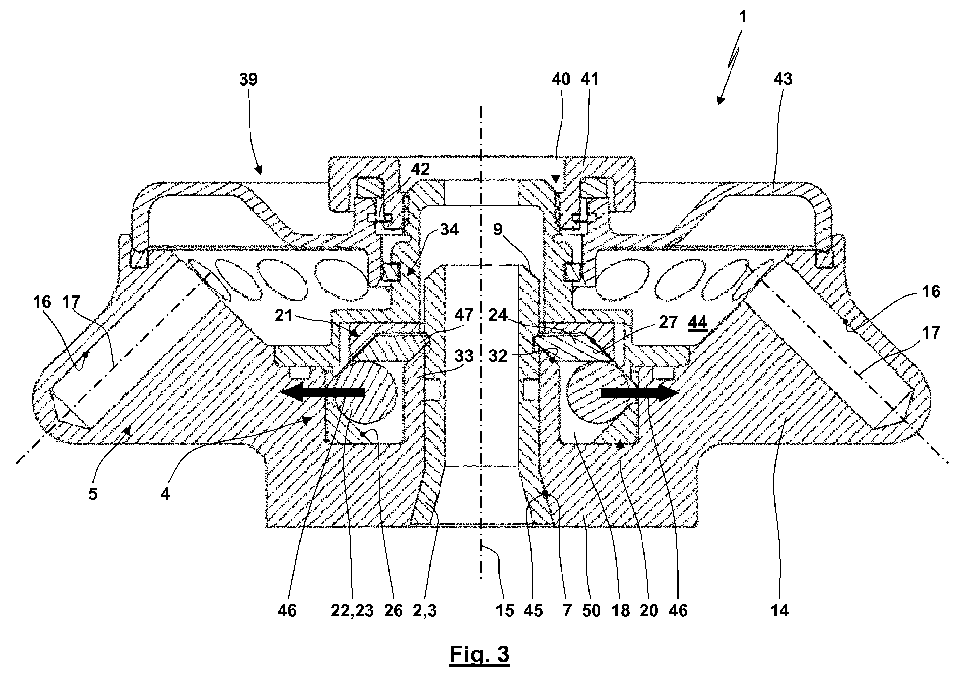

Kommt die Laborzentrifuge 1 nach der Beendigung des Zentrifugierens zum Stillstand, bewegen sich die Kupplungselemente 24 und die Rollen 23 infolge ihres Eigengewichts aus der gekuppelten Stellung gemäß Fig. 3 wieder zurück in die entkuppelte Stellung gemäß Fig. 2. Um dies zu gewährleisten, werden die Neigungswinkel der Führungsbahn 26 und der weiteren Führungsbahn 27, 32 sowie der Kontaktflächen zwischen Kupplungselement 24 und Ausnehmung 12 oder Nut 13 der Antriebswelle 3 vorzugsweise kleiner gewählt als ein Selbsthemmungswinkel. Somit kann mit Stillstand des Rotors 5 ohne weitere Maßnahmen und insbesondere ohne Betätigung eines manuellen Entriegelungselements der Rotor 5 von der Antriebswelle 3 nach oben abgehoben werden.

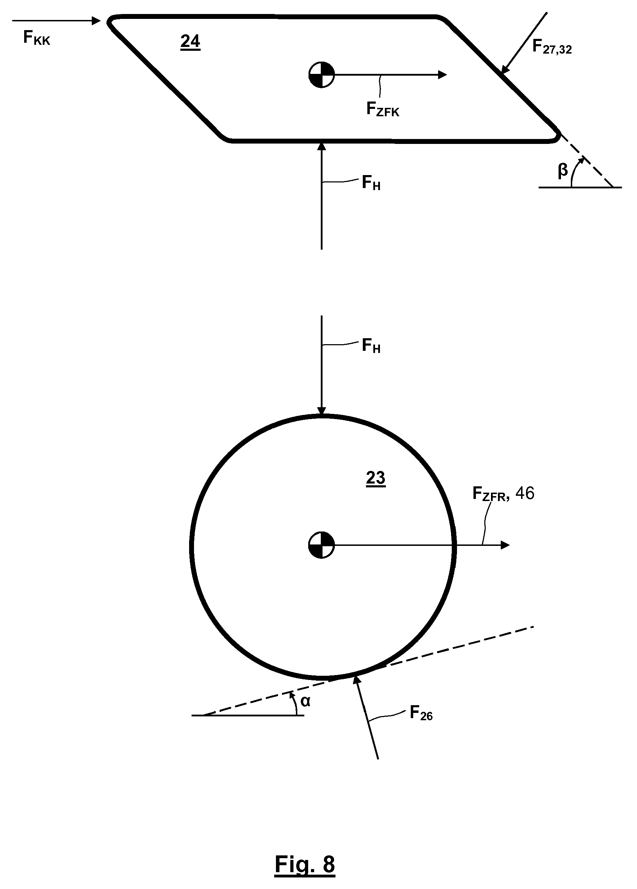

**Fig. 8** zeigt für die Ausführungsform gemäß Fig. 1 bis 7 ein Freikörperbild der Rolle 23 und des Kupplungselements 24:

Auf die Rolle 23 wirkt eine Zentrifugalkraft $F_{ZFR}$ (Bezugszeichen 46 in Fig. 3), welche sich aus dem Produkt der Masse der Rolle 23, dem Abstand des Schwerpunkts der Rolle 23 von der Rotationsachse 15 und dem Quadrat der Winkelgeschwindigkeit des Rotors 5 ergibt. Des Weiteren wirkt auf die Rolle 23 die auf das Kupplungselement 24 ausgeübte Hubkraft $F_H$ und eine Kraft $F_{26}$, welche von der Führungsbahn 26 auf die Rolle 23 ausgeübt wird. Bezeichnet $\alpha$ den Winkel der Führungsbahn 26 gegenüber einer Querebene zur Rotationsachse 15, so ergibt sich die Kraft $F_H$ aus $F_H = F_{ZFR} / \tan\alpha$.

Auf das Kupplungselement 24 wirkt einerseits eine Zentrifugalkraft $F_{ZFK}$, welche sich aus dem Produkt der Masse des Kupplungselements 24, dem Abstand des Schwerpunkts des Kupplungselements 24 von der Rotationsachse 15 und dem Quadrat der Winkelgeschwindigkeit des Rotors 5 ergibt. Auf das Kupplungselement 24 wirken des Weiteren die Hubkraft $F_H$, eine Kraft $F_{27,32}$, welche von der weiteren Führungsbahn 27, 32 auf das Kupplungselement 24 ausgeübt wird, sowie die Kupplungskraft $F_{KK}$, welche zwischen Kupplungselement 24 und der Nut 13 der Antriebswelle 3 wirkt. Beschreibt der Winkel $\beta$ die Neigung der weiteren Führungsbahn 27, 32 gegenüber einer Querebene zur Rotationsachse 15, folgt aus dem Freikörperbild gemäß Fig. 8, dass sich die Kupplungskraft $F_{KK}$ aus $F_{KK} = F_H \tan\beta - F_{ZFK}$ ergibt, womit

$$F_{KK} = F_{ZFR} (\tan\beta / \tan\alpha) - F_{ZFK}$$

gilt.

Hieraus ist ersichtlich, dass zur Herbeiführung einer möglichst großen Kupplungskraft erforderlich ist, dass der Einfluss der Masse des Kupplungselements 24 und des Abstands des Schwerpunkts des Kupplungselements 24 von der Rotationsachse 15 kleiner sein sollte als der Einfluss der Masse der Rolle 23 und des Abstands des Schwerpunkts der Rolle 23 von der Rotationsachse 15.

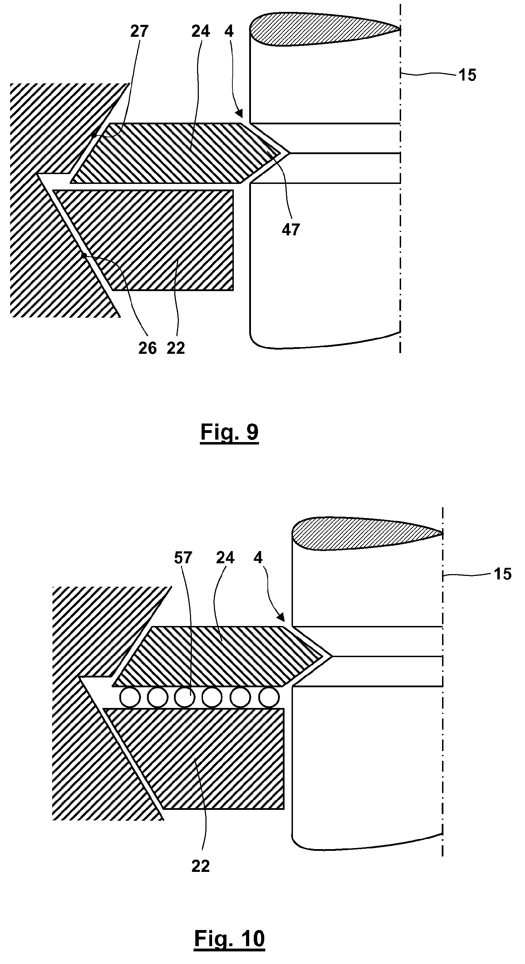

In Fig. 9 bis 14 sind stark schematisiert weitere Ausgestaltungen einer Kupplungseinrichtung 4 dargestellt:

Für das Ausführungsbeispiel gemäß **Fig. 9** bildet die Exzentermasse 22 einen Gleitkontakt mit der Führungsbahn 26 aus. Auch die Hubbewegung der Exzentermasse 22 wird über einen Gleitkontakt an das Kupplungselement 24 übertragen. Schließlich bildet auch das Kupplungselement 24 einen Gleitkontakt mit der weiteren Führungsbahn 27 aus. Mit einer Erhöhung der Drehzahl des Rotors 5 wandert die Exzentermasse 22 radial nach außen, während das Kupplungselement 24 radial nach innen bewegt wird mit einer gleitenden Relativbewegung zwischen der Exzentermasse 22 und dem Kupplungselement 24.

Für das in **Fig. 10** dargestellte Ausführungsbeispiel ist (bei ansonsten entsprechender Funktionsweise wie in Fig. 9) zwischen der Exzentermasse 22 und dem Kupplungselement 24 ein Wälzlager 57 angeordnet.

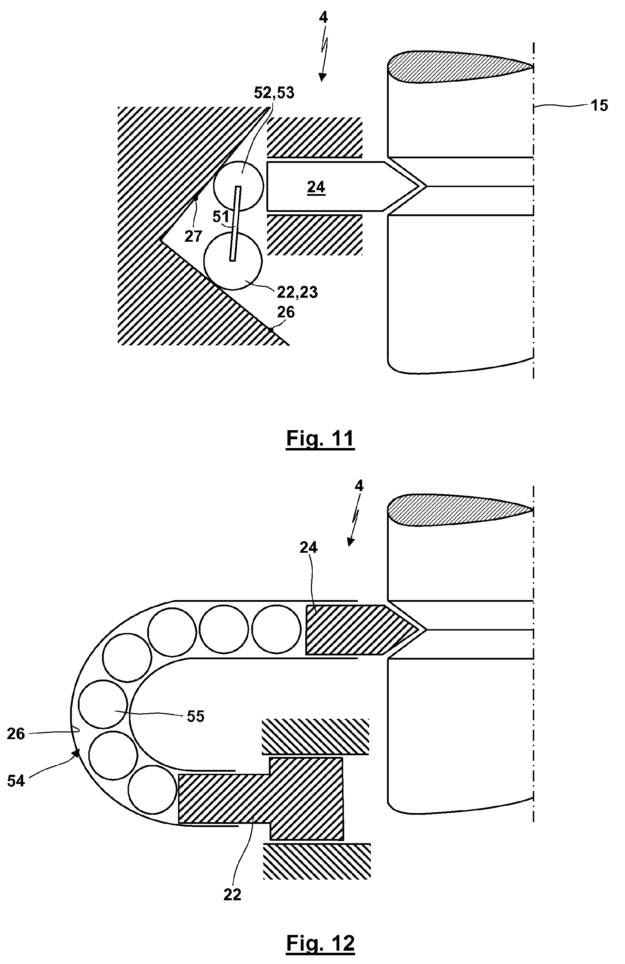

Gemäß **Fig. 11** ist die Exzentermasse 22 als Rolle 23 ausgebildet, welche an der Führungsbahn 26 abwälzt und über einen Käfig 51 gekoppelt ist mit einem Aufnahmekörper 52, der hier ebenfalls als Rolle 53 ausgebildet ist. Die Rolle 53 wälzt an der weiteren Führungsbahn 27 ab. Gleichzeitig liegt die Rolle 53 an dem Kupplungselement 24 an und beaufschlagt dieses radial nach innen in Richtung der Rotationsachse 15.

Für das in **Fig. 12** dargestellte Ausführungsbeispiel ist zwischen der hier gleitend geführten Exzentermasse 22 und dem Kupplungselement 24 ein über eine Führungsbahn 26 geführte und umlenkende Übertragungseinrichtung 54 zwischengeschaltet. Für das dargestellte Ausführungsbeispiel ist die Übertragungseinrichtung 54 mit in einem Kanal oder Rohr entlang der Führungsbahn 26 geführten Wälzkörpern 55 ausgebildet.

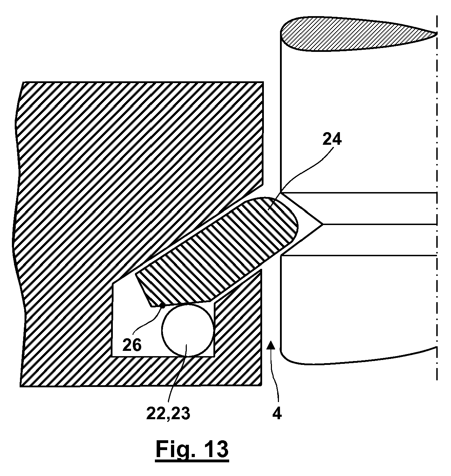

Gemäß **Fig. 13** ist die Exzentermasse 22 als Rolle 23 ausgebildet. Hier wird die Führungsbahn 26 unmittelbar von dem Kupplungskörper 24 ausgebildet.

## BEZUGSZEICHENLISTE

| | |
|---|---|
| 1 | Laborzentrifuge |
| 2 | Antriebselement |
| 3 | Antriebswelle |
| 4 | Kupplungseinrichtung |
| 5 | Rotor |
| 6 | kegelstumpfförmige Teilmantelfläche |
| 7 | Gegen-Reibfläche |
| 8 | zylindrische Teilmantelfläche |
| 9 | Einführschräge |
| 10 | Nut |
| 11 | Dichtelement |
| 12 | Ausnehmung |
| 13 | Nut |
| 14 | Grundkörper |
| 15 | Längs- und Rotationsachse |
| 16 | Aufnahme |
| 17 | Längsachse |
| 18 | Ringkammer |
| 19 | Einsatzkäfig |
| 20 | Grundkörper |
| 21 | Abdeckkörper |
| 22 | Exzentermasse |
| 23 | Rolle |
| 24 | Kupplungselement |
| 25 | Schlitz |
| 26 | Führungsbahn |

27 weitere Führungsbahn
28 Seitenfläche
29 Seitenfläche
30 Führungsfläche
31 Führungsfläche
32 weitere Führungsbahn
33 Wandung
34 Verschlussdeckel
35 Bohrung
36 Gewindebohrung
37 Fortsatz
38 Ausnehmung
39 Gehäusedeckel
40 Schraubverbindung
41 Gehäusemutter
42 Rastelement
43 Deckelteil
44 Aufnahmeraum
45 Reibfläche
46 Zentrifugalkraft
47 Rastnase
50 Abtriebselement
51 Käfig
52 Aufnahmekörper
53 Rolle
54 Übertragungseinrichtung
55 Wälzkörper
56 Wellenzapfen
57 Wälzlager

**Patentansprüche**

1. Zentrifugalkraftbetätigte Kupplungseinrichtung (4) für eine Laborzentrifuge (1) mit

   a) einem von einem Motor angetriebenen Antriebselement (2) und einem einem Rotor (5) der Laborzentrifuge zugeordneten Abtriebselement (50) und
   b) einem Kupplungselement (24), welches durch eine Kupplungskraft, die von einer Zentrifugalkraft infolge des rotierenden Antriebselements (2) abhängig ist, betätigt wird,

   **dadurch gekennzeichnet, dass**

   c) eine Führungsbahn (26) vorgesehen ist, welche eine Zentrifugalkraft (46) einer Exzentermasse (22), die die Kupplungskraft erzeugt und nicht unmittelbar das Kupplungselement ausbildet, umlenkt.

2. Kupplungseinrichtung (4) nach Anspruch 1, **dadurch gekennzeichnet, dass** eine weitere Führungsbahn (27, 32) vorgesehen ist, welche die Zentrifugalkraft (46) der Exzentermasse (22), die die Kupplungskraft erzeugt, nochmals umlenkt.

3. Kupplungseinrichtung (4) nach Anspruch 1 oder 2, **dadurch gekennzeichnet, dass** die Exzentermasse (22) als Kugel oder Rolle (23) ausgebildet ist, die einen wälzenden Kontakt mit der oder mindestens einer Führungsbahn (26) ausbildet.

4. Kupplungseinrichtung (4) nach einem der vorhergehenden Ansprüche, **dadurch gekennzeichnet, dass** die Führungsbahn (26) zumindest in einem Teilbereich gegenüber der auf die Exzentermasse (22) wirkenden Zentrifugalkraft (46) geneigt ist, so dass eine Kraftkomponente $F_H$ erzeugt wird,

   a) deren Betrag von der auf die Exzentermasse (22) wirkenden Zentrifugalkraft (46) abhängig ist, und
   b) die parallel zu der Rotationsachse (15) orientiert ist.

5. Kupplungseinrichtung (4) nach einem der vorhergehenden Ansprüche, **dadurch gekennzeichnet, dass** die über die geneigte Führungsbahn (26) erzeugte Kraftkomponente $F_H$ über die weitere Führungsbahn (26) umgewandelt wird in eine Kraftkomponente $F_{KK}$, welche das Kupplungselement (24) radial nach innen beaufschlagt.

6. Kupplungseinrichtung (4) nach Anspruch 5, **dadurch gekennzeichnet, dass** ein Aufnahmekörper (52) vorhanden ist, welcher die durch die geneigte Führungsbahn (26) in eine Kraftkomponente $F_H$ umgelenkte Zentrifugalkraft (46), die parallel zu der Rotationsachse (15) orientiert ist, aufnimmt, wobei der Aufnahmekörper (52) über die weitere Führungsbahn (27, 32) geführt ist, welche gegenüber der Rotationsachse (15) und gegenüber der Richtung quer zur Rotationsachse (15) derart geneigt ist, dass die Kupplungskraft $F_{KK}$, welche das Kupplungselement (24) radial nach innen beaufschlagt, erzeugt wird.

7. Kupplungseinrichtung (4) nach Anspruch 6, **dadurch gekennzeichnet, dass** der Aufnahmekörper von dem Kupplungselement (24) ausgebildet ist.

8. Kupplungseinrichtung (4) nach einem der vorhergehenden Ansprüche, **dadurch gekennzeichnet, dass** das Kupplungselement (24) formschlüssig in eine Ausnehmung (12) des Antriebselements (2) eingreift.

9. Kupplungseinrichtung (4) nach Anspruch 8, **dadurch gekennzeichnet, dass** das Kupplungselement (24) und die Ausnehmung (12) oder Nut (13) des Antriebselements (2) über Kontaktflächen miteinander in Wirkverbindung treten, wobei die Kontaktflächen derart geneigt sind, dass die Kupplungskraft in eine Axialkraftkomponente umgewandelt wird, welche das Abtriebselement (50) mit einer gegenüber der Rotationsachse geneigten Reibfläche (45) axial in eine Montagerichtung gegen eine gegenüber der Rotationsachse (15) entsprechend geneigte Gegen-Reibfläche (7) des Antriebselements (2) presst.

10. Kupplungseinrichtung (4) nach einem der vorhergehenden Ansprüche, **dadurch gekennzeichnet, dass** ein Einsatzkäfig (19) vorhanden ist,

    a) in welchem die mindestens eine Exzentermasse (22), der mindestens eine Aufnahmekörper, das mindestens eine Kupplungselement (24) und/oder ein eine Führungsfläche ausbildender Führungskörper aufgenommen ist/sind und/oder
    b) welcher die Führungsbahn (26) und/oder die weitere Führungsbahn (27, 32) ausbildet.

11. Laborzentrifuge (1) mit einer Kupplungseinrichtung (4) nach einem der vorhergehenden Ansprüche.

## Claims

1. Coupling device (4) actuated by a centrifugal force for a laboratory centrifuge (1) comprising

    a) an input element (2) driven by a motor and an output element (50) related to a rotor (5) of the laboratory centrifuge and
    b) a coupling element (24) which is actuated by a coupling force which depends on a centrifugal force being caused by the rotating input element (2),

    **characterised in that**

    c) a guideway (26) is provided which deflects a centrifugal force (46) of an eccentric mass (22) which produces the coupling force and which does not directly form the coupling element.

2. Coupling device (4) of claim 1, **characterised in that** another guideway (27, 32) is provided which again deflects the centrifugal force (46) of the eccentric mass (22) which produces the coupling force.

3. Coupling device (4) of claim 1 or 2, **characterised in that** the eccentric mass (22) is formed by a sphere or roller (23) which is in rolling contact with the or at least one guideway (26).

4. Coupling device (4) of one of the preceding claims, **characterised in that** at least in a subregion the guideway (26) is inclined with respect to the centrifugal force (46) being caused by the eccentric mass (22) such that a force component $F_H$ is produced

    a) having a magnitude which depends on the centrifugal force (46) being effective at the eccentric mass (22) and
    b) which has an orientation parallel to the axis of rotation (15).

5. Coupling device (4) of one of the preceding claims, **characterised in that** the force component $F_H$ produced by the inclined guideway (26) is transformed by the other guideway (26) into a force component $F_{KK}$ which biases the coupling element (24) in radial inner direction.

6. Coupling device (4) of claim 5, **characterised in that** a receiving body (52) is provided which receives the centrifugal force (46) which is deflected by the inclined guideway (26) into a force component $F_H$ and which has an orientation parallel to the axis of rotation (15), the receiving body (52) being guided by the other guideway (27, 32) which is inclined with respect to the axis of rotation (15) and with respect to the direction transverse to the axis of rotation (15) such that the coupling force $F_{KK}$ is produced which biases the coupling element (24) in radial inner direction.

7. Coupling device (4) of claim 6, **characterised in that** the receiving body is formed by the coupling element (24).

8. Coupling device (4) of one of the preceding claims, **characterised in that** the coupling element (24) engages with a form-fit or in an interlocking fashion with a recess (12) of the input element (2).

9. Coupling device (4) of claim 8, **characterised in that** coupling element (24) and the recess (12) or groove (13) of the input element (2) interact by contact surfaces with each other, the contact surfaces having an inclination such that the coupling force is transformed into an axial force component which presses the output element (50) with a friction surface (45) being inclined with respect to the axis of rotation in axial direction in the direction of the assembly against a counter friction surface (7) of the input element (2) being inclined in a corresponding way relative to the axis of rotation (15).

10. Coupling device (4) of one of the preceding claims, **characterised in that** an insert cage (19) is provided

    a) wherein the at least one eccentric mass (22), the at least one receiving body, the at least one coupling element (24) and/or a guiding body forming a guiding surface is accommodated or housed and/or
    b) which forms the guideway (26) and/or the other guideway (27, 32).

**11.** Laboratory centrifuge (1) with a coupling device (4) of one of the preceding claims.

**Revendications**

**1.** Ensemble d'embrayage (4) actionné par la force centrifuge pour une centrifugeuse de laboratoire (1), avec

a) un élément d'entraînement (2) entraîné par un moteur et avec un élément de sortie (50) affecté à un rotor (5) de la centrifugeuse de laboratoire, et
b) un élément d'embrayage (24) qui est actionné par une force d'embrayage qui est fonction d'une force centrifuge du fait de l'élément d'entraînement (2) en rotation,

**caractérisé en ce que**

c) il est prévu une voie de guidage (26) qui dévie une force centrifuge (46) d'une masse excentrique (22) qui produit la force d'embrayage et ne constitue pas directement l'élément d'embrayage.

**2.** Ensemble d'embrayage (4) selon la revendication 1, **caractérisé en ce qu'**il est prévu une autre voie de guidage (27, 32) qui dévie une nouvelle fois la force centrifuge (46) de la masse excentrique (22) qui produit la force d'embrayage.

**3.** Ensemble d'embrayage (4) selon la revendication 1 ou 2, **caractérisé en ce que** la masse excentrique (22) est constituée en tant que bille ou rouleau (23) qui constitue un contact roulant avec la ou au moins une voie de guidage (26).

**4.** Ensemble d'embrayage (4) selon l'un des revendications précédentes, **caractérisé en ce que** la voie de guidage (26) est, au moins dans une zone partielle, inclinée par rapport à la force centrifuge (46) agissant sur la masse excentrique (22) de telle sorte qu'une composante de force $F_H$ est produite

a) dont l'importance est fonction de la force centrifuge (46) agissant sur la masse excentrique (22), et
b) qui est orientée parallèlement à l'axe de rotation (15).

**5.** Ensemble d'embrayage (4) selon l'un des revendications précédentes, **caractérisé en ce que** la composante de force $F_H$ produite par le biais de la voie de guidage (26) inclinée est, sur la suite de la voie de guidage (26), convertie en une composante de force $F_{KK}$, laquelle alimente radialement vers l'intérieur l'élément d'embrayage (24).

**6.** Ensemble d'embrayage (4) selon la revendication 5, **caractérisé en ce qu'**il existe un corps de réception (52) qui reçoit la force centrifuge (46) qui est déviée en une composante de force $F_H$ par la voie de guidage (26) inclinée et qui est orientée parallèlement à l'axe de rotation (15), le corps de réception (52) étant guidé sur la suite de la voie de guidage (27, 32) qui est inclinée par rapport à l'axe de rotation (15) et par rapport à la direction transversalement à l'axe de rotation (15) de telle sorte qu'est produite la composante de force $F_{KK}$ qui alimente radialement vers l'intérieur l'élément d'embrayage (24).

**7.** Ensemble d'embrayage (4) selon la revendication 6, **caractérisé en ce que** le corps de réception est constitué par l'élément d'embrayage (24).

**8.** Ensemble d'embrayage (4) selon l'un des revendications précédentes, **caractérisé en ce que** l'élément d'embrayage (24) engrène par liaison de forme dans un creux (12) de l'élément d'entraînement (2).

**9.** Ensemble d'embrayage (4) selon la revendication 8, **caractérisé en ce que** l'élément d'embrayage (24) et le creux (12) ou la rainure (13) de l'élément d'entraînement (2) entrent en interaction l'un avec l'autre par le biais de surfaces de contact, les surfaces de contact étant inclinées de telle sorte que la force d'embrayage est transformée en une composante de force axiale qui presse l'élément de sortie (50) avec une surface de friction (45), inclinée par rapport à l'axe de rotation, axialement dans une direction de montage contre une contre-surface de friction (7) de l'élément d'entraînement (2) qui est inclinée en conséquence par rapport à l'axe de rotation (15).

**10.** Ensemble d'embrayage (4) selon l'un des revendications précédentes, **caractérisé en ce qu'**il existe une cage d'insertion (19)

a) dans laquelle la masse excentrique (22) au moins au nombre de un, le corps de réception au moins au nombre de un, l'élément d'embrayage (24) au moins au nombre de un et/ou un corps de guidage constituant une surface de guidage est/sont reçu(e)s, et/ou
b) qui constitue la voie de guidage (26) et/ou la suite de la voie de guidage (27, 32).

**11.** Centrifugeuse de laboratoire (1) avec un dispositif d'accouplement (4) selon des revendications précédentes.

Fig. 1

**Fig. 2**

EP 3 012 027 B1

Fig. 3

EP 3 012 027 B1

**Fig. 4**

**Fig. 5**

**Fig. 6**

**Fig. 7**

$F_{KK}$

<u>24</u>

$F_{27,32}$

$F_{ZFK}$

$\beta$

$F_H$

$F_H$

<u>23</u>

$F_{ZFR}$, 46

$\alpha$

$F_{26}$

<u>Fig. 8</u>

**Fig. 9**

**Fig. 10**

**Fig. 11**

**Fig. 12**

**24**

**26**

**22,23**

**4**

**Fig. 13**

**EP 3 012 027 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6063018 A
- WO 2010025922 A1
- DE 102012011531 A1
- WO 2011001729 A1
- WO 2011054901 A1
- WO 2011054906 A1
- WO 2012059151 A1